# EUROPEAN PATENT APPLICATION

(11) **EP 4 722 901 A1**
(43) Date of publication of application: **08.04.2026**
(21) Application number: 24306607.3
(22) Date of filing: 01.10.2024
(51) Int. Cl.: G06F 9/30

(54) **REDUCE MEMORY BANDWIDTH UTILIZATION BY COMPRESSING SIMD MASKS**

(71) Applicant: InterDigital CE Patent Holdings, SAS, 75017 Paris (FR)
(72) Inventor: POIRIER, Guillaume, 35200 Rennes (FR); CAUVIN, Laurent, 35250 Chevaigne (FR); MAZZANTE, Angelo, 35520 Melesse (FR)
(74) Representative: Interdigital

(57) **Abstract**

A method comprising:
obtaining (401) a compressed binary mask;
broadcasting (402) the compressed mask on each element of a first vector of data;
obtaining (403) a fixed binary mask, each element of the fixed mask having a single non-zero bit, the single non-zero bit of the rightmost element of the fixed mask being located at the rightmost position of the element, the single non-zero bit of a first element of the fixed mask being right shifted of one unit with respect to a position of the non-zero bit of a second element of the mask on its right when present;
combining (404) the first vector with the fixed mask using a bitwise AND operator; and,
obtaining (405) the binary mask from a comparison of the second vector with an all zero vector.

## Description

### 1. TECHNICAL FIELD

At least one of the present embodiments generally relates to the field of processing of a large quantity of data and more particularly to a method for reducing a memory bandwidth utilization when processing data.

### 2. BACKGROUND

Last decades have seen an exponential increase of the quantity of data to be processed by electronic devices. This is particularly the case in signal processing, artificial intelligence and telecommunications.

Processing such quantity of data was rendered possible by the improvements of electronic circuits such as CPU (central processing units) (i.e., microprocessors, general purpose computers, special purpose computers, processors based on a multi-core architecture), memories (i.e., random access memory (RAM), a read only memory (ROM); Electrically Erasable Programmable Read-Only Memory (EEPROM), Programmable Read-Only Memory (PROM), Dynamic Random Access Memory (DRAM), Static Random Access Memory (SRAM), etc) and communication interfaces.

The Single Instruction, Multiple Data (SIMD) is a popular processing architecture offering parallelization capacities. In a parallelized processing mode, a same instruction is applied simultaneously to a plurality of data to produce a plurality of results.

However, relying only on the improvements of the electronic circuits may not sufficient and there is still a need for intelligent processing strategies to go further in the improvements.

For example, one of the main challenges in SIMD programming is its limited control flow options, as the same instruction is applied to all elements of a vector. This limitation makes it difficult to solve problems that are typically easy to handle with conditional statements like "if" "then" "else".

It is desirable to overcome the above drawbacks.

It is particularly desirable to propose a solution allowing to obtain a constant complexity which would consume less hardware resources.

### 3. BRIEF SUMMARY

In a first aspect, one or more of the present embodiments provide a method comprising:
obtaining a compressed binary mask;
broadcasting the compressed mask on each element of a first vector of data;
obtaining a fixed binary mask, each element of the fixed binary mask having a single non-zero bit, the single non-zero bit of a rightmost element of the fixed binary mask being located at a rightmost position of the element, the single non-zero bit of a first element of the fixed binary mask being right shifted of one unit with respect to a position of the single non-zero bit of a second element of the fixed binary mask on its right when present;
combining the first vector with the fixed binary mask using a bitwise AND operator setting to one bits that are equal to one in both the fixed binary mask and the first vector, other bits being set to zero to obtain a second vector; and,
obtaining the binary mask from a comparison of the second vector with an all zero vector.

In a second aspect, one or more of the present embodiments provide a method comprising:
obtaining a binary mask;
compressing the binary mask to obtain a compressed binary mask;
storing the compressed binary mask;
applying the method of the first aspect to decompress the compressed binary mask; and,
applying the decompressed compressed binary mask.

In an embodiment, the compressed binary mask is stored in a scalar value or in an array depending on memory accesses between the compressing of the binary mask and the applying of the decompressed compressed binary mask.

In a third aspect, one or more of the present embodiments provide a device comprising electronic circuitry configured for:
obtaining a compressed binary mask;
broadcasting the compressed mask on each element of a first vector of data;
obtaining a fixed binary mask, each element of the fixed binary mask having a single non-zero bit, the single non-zero bit of a rightmost element of the fixed binary mask being located at a rightmost position of the element, the single non-zero bit of a first element of the fixed binary mask being right shifted of one unit with respect to a position of the single non-zero bit of a second element of the fixed binary mask on its right when present;
combining the first vector with the fixed binary mask using a bitwise AND operator setting to one bits that are equal to one in both the fixed binary mask and the first vector, other bits being set to zero to obtain a second vector; and,
obtaining the binary mask from a comparison of the second vector with an all zero vector.

In a fourth aspect, one or more of the present embodiments provide an apparatus comprising electronic circuitry configured for:
obtaining a binary mask;
compressing the binary mask to obtain a compressed binary mask;
storing the compressed binary mask;
using the device of the third aspect for decompressing the compressed binary mask; and,
applying the decompressed compressed binary mask.

In an embodiment, the compressed binary mask is stored in a scalar value or in an array depending on memory accesses between the compressing of the binary mask and the applying of the decompressed compressed binary mask.

In a fifth aspect, one or more of the present embodiments provide a computer program comprising program code instructions for implementing the method according to the first or the second aspect.

In a sixth aspect, one or more of the present embodiments provide a non-transitory information storage medium storing program code instructions for implementing the method according to the first or the second aspect.

### 4. BRIEF SUMMARY OF THE DRAWINGS

Fig. 1 discloses an example of an initial program code implemented by two different non-SIMD branchless processes;
Fig. 2 provide an example of a version of the initial program code of Fig. 1 wherein a generation of a mask and the use of the mask *mask* are separated by a lot of code with memory accesses;
Fig. 3A illustrates with a pseudo-code an SSE instruction _*mm*_*movemask_ps*;
Fig. 3B illustrates graphically the SSE instruction _*mm*_*movemask_ps*;
Fig. 4A illustrates a decompression process according to an embodiment;
Fig. 4B illustrates an example of decompression of a compressed vector mask;
Fig. 5 illustrates a signal processing process using masks;
Fig. 7A illustrates schematically an example of hardware architecture of a processing module able to implement various aspects and embodiments;
Fig. 7B illustrates a block diagram of an example of a first system in which various aspects and embodiments are implemented; and,
Fig. 7C illustrates a block diagram of an example of a second system in which various aspects and embodiments are implemented.

### 5. DETAILED DESCRIPTION

As already mentioned in introduction of this application, one of the main challenges in SIMD programming is its limited control flow options, as the same operations are applied to all elements of a vector.

This limitation makes it difficult to solve problems that are typically easy to handle with conditional statements like "if" "then" "else". In SIMD, these issues must be addressed using branchless programming methods.

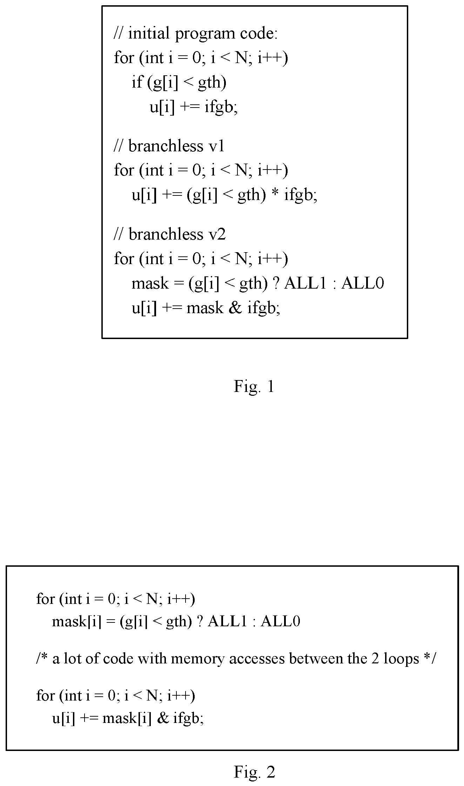

**Fig. 1** discloses an example of an initial program code implemented by two different non-SIMD branchless processes.

The "branchless v1" version of the initial program code relies on an assumption that a comparison (i.e., g[i] < gth) yields "0" or "1". Multiplying by "0" or "1" gives respectively "0" or "identity".

With SIMD architecture, this solution is not preferred for the following reasons:
Multiplication frequently have a 3x latency and 2x throughput compared to an AND operation;
Integer multiplication's result is twice as wide as the operands. That is, multiplying two "32" bits integers give a "64" bits value. Therefore, multiplying a vector of integer elements requires two multiplications and some elements shuffling, adding more instructions and latencies. This problem does not exist with floating-point elements, where any "32" bits floating-point mathematical operation gives a "32" bits result. The bit pattern of "1" on "32" bits integer is "0x00000001" while it is "0x3f800000" on 32 bits floating-point, which means that the same operand cannot be used for both floating point and integer operations.

On SIMD, the "branchless v2" version of the initial program code of Fig. 1 is typically what is proposed by SSE (Streaming SIMD Extensions), AVX (Advanced Vector Extensions), Neon or Altivec instruction sets.

For example, the AVX instructions *_mm256_cmpgt_epi32(a,b)* or Altivec instruction *vec*_*cmpgt(a,b)* do the following:
*Each element of the result is all ones if the corresponding element of "a" is greater than the corresponding element of "b* ". *Otherwise, it returns all zeros.*

This assumption allows defining a binary mask (or more simply, a mask) *mask.* Then, the mask *mask* is used with a AND binary operator to filter results. Note that binary AND operator works whatever the underlying type, integer or floating-point.

In Fig. 1, the mask *mask* is computed and used right away. However, the data used to compute the mask *mask* may be no longer available at a step of a code when it is needed to be used as in Fig. 2.

**Fig. 2** provide an example of the "branchless v2" version of the initial program code of Fig. 1 wherein the generation of the mask *mask* and the use of the mask *mask* are separated by a lot of code with memory accesses.

There is therefore a need to store the mask *mask* for a later use.

Masks are practical and map well with SIMD instructions but have a very low information density. For "32" bits integer or "32" bits floats, all one/zero masks represent about 31/32 (97%) waste of space. This does not matter when the construction of the mask follows immediately its use, like in Fig. 1, but causes needless memory traffic when the mask needs to be stored to be used much later like in Fig. 2.

In other words, when masks, called *vector mask* in the following) production is not immediately followed by a consumption of the vector masks, the vector masks need to be stored, inducing needless memory traffics. This is a problem because of the ever-increasing memory gap (see document Carvalho, C. (2002). The Gap between Processor and Memory Speeds. ICCA*),* not solved by modem memory technologies like on-CPU-die memory (see document Gholami, A., Yao, Z., Kim, S., Hooper, C., Mahoney, M., & Keutzer, K. (2024). AI and Memory Wall. IEEE Micro Journal*).*

A solution to this problem based on a compression of vector masks is proposed in the following besides the fact that no direct instruction exists.

### Compression of a vector mask

To save space, extracting a bit from each all-0/1 vector mask element to condense to a single scalar value would be useful. It's what the SSE instruction _*mm_movemask_ps ()* does. For instance, the SSE instruction *int mm _movemask_ps (_m128 a)* sets each bit of a vector mask *dst* based on the most significant bit of the corresponding packed single-precision (32-bit) floating-point element in *a.*

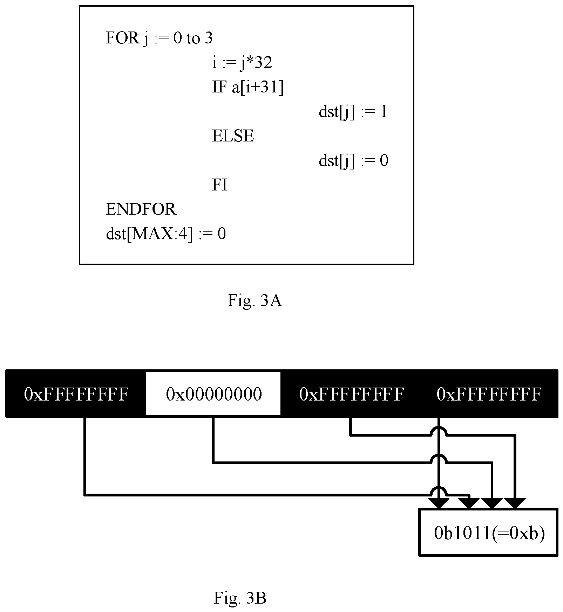

**Fig. 3A** illustrates with a pseudo-code the SSE instruction _*mm _movemask_ps (_m128 a).*

**Fig. 3B** illustrates graphically the SSE instruction *_mm_movemask_ps (_m128 a).*

### Storage of a compressed vector mask

A compressed vector mask can simply be written to a scalar variable if a part of the processing using the vector mask is not so far away or written to an array if the part of the processing using the vector mask is far away (i.e., separated from the part having generated the vector mask by a lot of code with memory accesses).

### Decompression of a compressed vector mask

A compressed vector cannot be used as is by a SIMD code. Indeed, no SIMD mask operation instruction taking a vector mask as a scalar/compressed value exists. The compressed vector mask needs to be expanded back as vector mask of all 0/1.

De-compressing consists in reversing the compressing operation described in above.

In the following embodiment, the decompression of a compressed vector mask is emulated using several instructions.

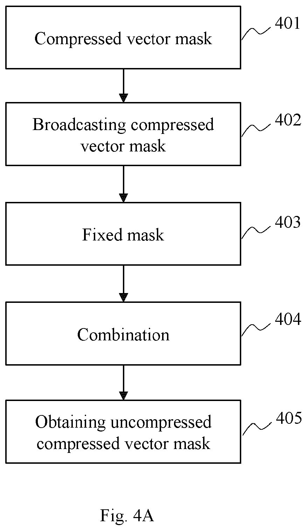

**Fig. 4A** illustrates a decompression process according to an embodiment.

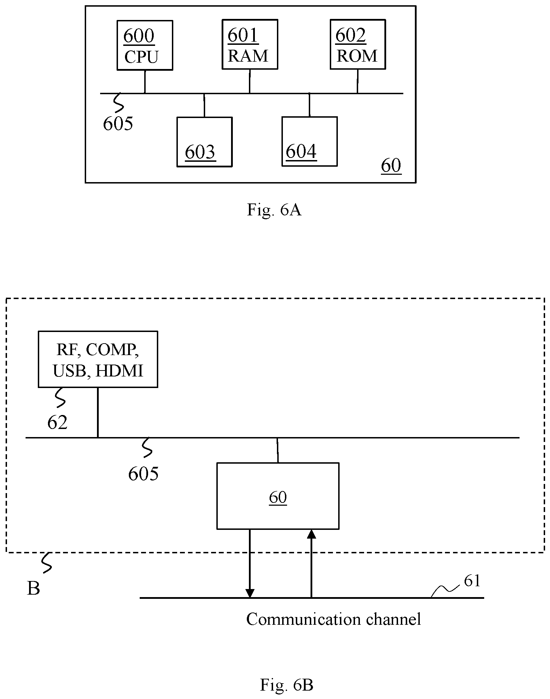

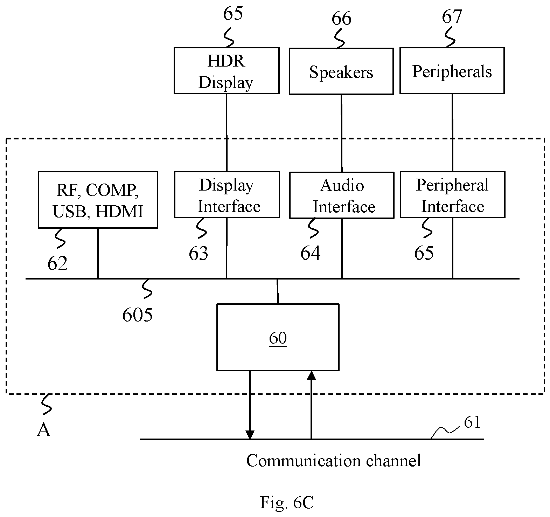

The process of Fig. 4A is for example executed by a processing module 60 of a system A or by a processing module 60 of a system B, the processing module 60, the systems A and B being described below in relation to Fig. 6A, 6B and 6C.

In a step 401, the processing module 60 obtains a compressed vector mask.

In a step 402, the processing module 60 broadcasts the compressed vector mask is in a first vector. In other word, the value of the compressed vector mask is copied in each element of the first vector.

In a step 403, the processing module 60 obtains a fixed mask. The fixed mask consists in a bitmask where only the first bit is set to "1" in a first element of a vector, only the second bit is set to "1" in a second element of the vector ("1" right shifted once), only the third bit is set to "1" in the third element of the vector ("1" right shifted twice), and so forth. In other words, each element of the fixed mask has a single non-zero bit. The single non-zero bit of the rightmost element of the fixed mask is located at the rightmost position of the element. A position of the single non-zero bit of a first element of the fixed mask is right shifted of one unit with respect to a position of the non-zero bit of a second element of the mask on its right when present.

Note that an element is a set of bits of size 8 × 2*ⁿ* where n is an integer value greater or equal to "1".

In a step 404, the processing module 60 combined the first vector and the fixed mask with a bitwise AND operator in single vector. The bitwise AND operator sets to "1" only bits that are "1" in both vectors, other bits being set to "0". At this point, the elements of the single vector are either set to all-zero or non-zero (i.e. the result is never all-ones), which is rarely useful in SIMD computations.

In a step 405, the processing module 60 determines if the single vector is greater or equal to an all-zero vector. This yields to all-zero or all one bits in each element of a final vector. The final vector corresponds to the decompressed compressed vector mask.

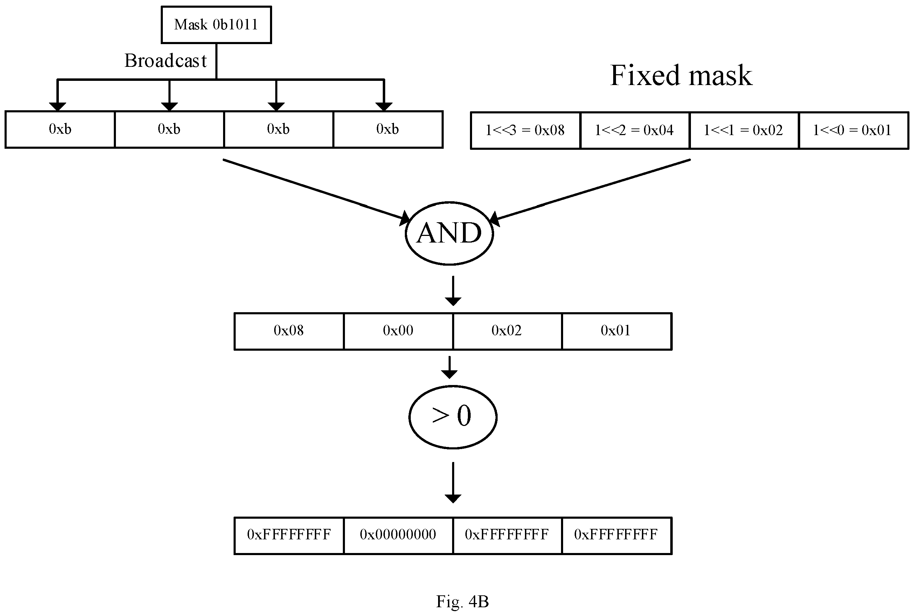

**Fig. 4B** illustrates an example of decompression of the compressed vector mask of Fig. 3B.

On the top left of Fig. 4B we represented the compressed vector mask obtained in Fig. 3B. Its content is broadcasted on every element of a first vector.

The fixed vector mask is represented in the top right part of Fig. 4B.

As represented in the middle of Fig. 4B, the first and the fixed vectors are combined with a bitwise AND operator in a second vector.

Then in the bottom, it is determined whether the second vector is greater or equal to an all-zero vector (As in SSE instruction _*mm_cmpgt epi32()*). This yields an all-zero or all one bits in each vector element of the final vector which corresponds to the uncompressed compressed vector mask.

The above embodiments can be used on any algorithm that has two or more passes, where a first pass has one of more data-dependent branches that position one or more flags, and the following passes uses these flags.

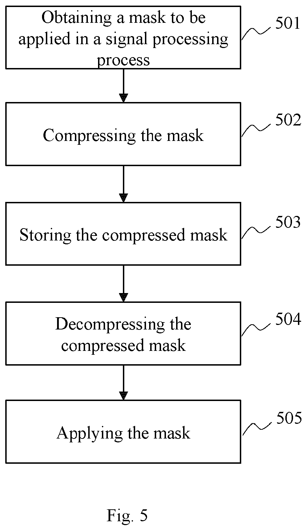

**Fig. 5** illustrates a signal processing process using masks.

The signal processing process of Fig. 5 is for instance executed by the processing module 60 of the system A or by the processing module 60 of the system B.

In a step 501, the processing module 60 obtains a mask to be applied in a signal processing process. For example, the signal processing process is a process for analyzing RGB values of a pixel, for example the relative value of Green vs Blue components or Green vs Red components, or for applying an offset on U or V components of a YUV signal.

In a step 502, the processing module 60 compresses the mask applying the process illustrated in Fig. 3A and 3B.

In a step 503, the processing module 60 stores the compressed mask. In an embodiment, the compressed mask is stored in an array for future use.

In a step 504, the processing modules extracts the compressed mask from the array and applies on the compressed mask the decompression process of Fig. 4A to obtain the mask.

In a step 505, the processing module 60 applies the mask during the signal processing process.

One can note that compressing masks can occur on masks computed with all types supported by an SIMD instruction set. However, compressing a mask of vector of "64" bits elements is much more space efficient (63/64=98 %) than a vector of 8-bits elements ( 7/8=87%). The decompression does not have to yield a mask of the same type as the one compressed. That is, a pair of "32" bits floating-point vector masks (e.g. "8" "32" bits elements can fit on a "256" bits AVX2 vector) can be used to create a mask for a "16" bits integer vector mask (e.g. "16" "16" bits elements can fit on an AVX2 vector).

**Fig. 6A** illustrates schematically an example of hardware architecture of a processing module 60 used for instance for executing a signal processing process. The processing module 60 comprises, connected by a communication bus 605: a processor or CPU (central processing unit) 600 encompassing one or more microprocessors, general purpose computers, special purpose computers, and processors based on a multi-core architecture, as non-limiting examples; a random access memory (RAM) 601; a read only memory (ROM) 602; a storage unit 603, which can include nonvolatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive, or a storage medium reader, such as a SD (secure digital) card reader and/or a hard disc drive (HDD) and/or a network accessible storage device; at least one communication interface 604 for exchanging data with other modules, devices, systems or equipment. The communication interface 604 can include, but is not limited to, a transceiver configured to transmit and to receive data over a communication network 61. The communication interface 604 can include, but is not limited to, a modem or a network card.

For example, the communication interface 604 enables for instance the processing module to receive RGB or YUV data.

The processor 600 is capable of executing instructions loaded into the RAM 601 from the ROM 602, from an external memory (not shown), from a storage medium, or from a communication network. When the processing module 60 is powered up, the processor 600 is capable of reading instructions from the RAM 601 and executing them.

The processing module 60 is configured to execute the signal processing process of Fig. 5.

All or some of the algorithms and steps of said process may be implemented in software form by the execution of a set of instructions by a programmable machine such as a DSP (digital signal processor) or a microcontroller, or be implemented in hardware form by a machine or a dedicated component such as a FPGA (field-programmable gate array) or an ASIC (application-specific integrated circuit).

**Fig. 6C** illustrates a block diagram of an example of a system A implementing a signal processing module in which various aspects and embodiments are implemented.

System A can be embodied as a device including various components or modules and is configured to generate a signal. For instance, the system A is configured to generate RGB or YUV pictures, or compressed RGB or YUV pictures or video data. Examples of such system include, but are not limited to, various electronic systems such as personal computers, laptop computers, smartphones, tablet, TV, or set top boxes. Components of system A, singly or in combination, can be embodied in a single integrated circuit (IC), multiple ICs, and/or discrete components. For example, in at least one embodiment, the system A comprises one processing module 60 that implements the signal processing process of Fig. 5. In various embodiments, the system A is communicatively coupled to one or more other systems, or other electronic devices, via, for example, a communication bus or through dedicated input and/or output ports.

The input to the processing module 60 can be provided through various input modules as indicated in a block 62. Such input modules include, but are not limited to, (i) a radio frequency (RF) module that receives an RF signal transmitted, for example, over the air by a broadcaster, (ii) a component (COMP) input module (or a set of COMP input modules), (iii) a Universal Serial Bus (USB) input module, and/or (iv) a High Definition Multimedia Interface (HDMI) input module. Other examples, not shown in FIG. 6C, include composite video.

In various embodiments, the input modules of block 62 have associated respective input processing elements as known in the art. For example, the RF module can be associated with elements suitable for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which can be referred to as a channel in certain embodiments, (iv) demodulating the down-converted and bandlimited signal, (v) performing error correction, and (vi) demultiplexing to select the desired stream of data packets. The RF module of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, down-converting the received signal to a lower frequency (for example, an intermediate frequency or a near-baseband frequency) or to baseband. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF module includes an antenna.

Additionally, the USB and/or HDMI modules can include respective interface processors for connecting system A to other electronic devices across USB and/or HDMI connections. It is to be understood that various aspects of input processing, for example, Reed-Solomon error correction, can be implemented, for example, within a separate input processing IC or within the processing module 60 as necessary. Similarly, aspects of USB or HDMI interface processing can be implemented within separate interface ICs or within the processing module 60 as necessary. The demodulated, error corrected, and demultiplexed stream is provided to the processing module 60.

Various elements of system A can be provided within an integrated housing. Within the integrated housing, the various elements can be interconnected and transmit data therebetween using suitable connection arrangements, for example, an internal bus as known in the art, including the Inter-IC (I2C) bus, wiring, and printed circuit boards. For example, in the system A, the processing module 60 is interconnected to other elements of said system A by the bus 605.

The communication interface 604 of the processing module 60 allows the system A to communicate on the communication network 61. The communication network 61 can be implemented, for example, within a wired and/or a wireless medium.

Data is streamed, or otherwise provided, to the system A, in various embodiments, using a wireless network such as a Wi-Fi network, for example IEEE 802.11 (IEEE refers to the Institute of Electrical and Electronics Engineers). The Wi-Fi signal of these embodiments is received over the communications network 61 and the communications interface 604 which are adapted for Wi-Fi communications. The communications network 61 of these embodiments is typically connected to an access point or router that provides access to external networks including the Internet for allowing streaming applications and other over-the-top communications. Still other embodiments provide streamed data to the system A using the RF connection of the input block 62. As indicated above, various embodiments provide data in a non-streaming manner, for example, when the system A is a smartphone or a tablet. Additionally, various embodiments use wireless networks other than Wi-Fi, for example a cellular network or a Bluetooth network.

The system A can provide an output signal to various output devices using the communication network 61 or the bus 605. For example, the system A can provide a compressed video.

The system A can provide an output signal to various output devices, including a display 65, speakers 66, and other peripheral devices 67. The display 65 of various embodiments includes one or more of, for example, a touchscreen display, an organic light-emitting diode (OLED) display, a curved display, and/or a foldable display. The display 65 can be for a television, a tablet, a laptop, a cell phone (mobile phone), or other devices. The display 65 can also be integrated with other components (for example, as in a smart phone), or separate (for example, an external monitor for a laptop). The other peripheral devices 67 include, in various examples of embodiments, one or more of a stand-alone digital video disc (or digital versatile disc) (DVR, for both terms), a disk player, a stereo system, and/or a lighting system. Various embodiments use one or more peripheral devices 67 that provide a function based on the output of the system A. For example, a disk player performs the function of playing the output of the system A.

In various embodiments, control signals are communicated between the system A and the display 65, speakers 66, or other peripheral devices 67 using signaling such as AV.Link, Consumer Electronics Control (CEC), or other communications protocols that enable device-to-device control with or without user intervention. The output devices can be communicatively coupled to system A via dedicated connections through respective interfaces 63, 64, and 65. Alternatively, the output devices can be connected to system A using the communication network 61 via the communication interface 604. The display 65 and speakers 66 can be integrated in a single unit with the other components of system A in an electronic device such as, for example, a television. In various embodiments, the display interface 63 includes a display driver, such as, for example, a timing controller (T Con) chip.

The display 65 and speakers 66 can alternatively be separate from one or more of the other components, for example, if the RF module of block 62 is part of a separate set-top box. In various embodiments in which the display 65 and speakers 66 are external components, the output signal can be provided via dedicated output connections, including, for example, HDMI ports, USB ports, or COMP outputs.

**Fig. 6B** illustrates a block diagram of an example of the system B adapted to implement the signal process processing process of Fig. 5 in which various aspects and embodiments are implemented.

System B can be embodied as a device including the various components and modules described above and is configured to perform one or more of the aspects and embodiments described in this document.

Examples of such devices include, but are not limited to, various electronic devices such as personal computers, laptop computers, a camera, a smartphone and a server. Elements or modules of system B, singly or in combination, can be embodied in a single integrated circuit (IC), multiple ICs, and/or discrete components. For example, in at least one embodiment, the system B comprises one processing module 60 that implement the signal processing process of Fig. 5. In various embodiments, the system B is communicatively coupled to one or more other systems, or other electronic devices, via, for example, a communications bus or through dedicated input and/or output ports.

The input to the processing module 60 can be provided through various input modules as indicated in block 62 already described in relation to Fig. 6C.

Various elements of system B can be provided within an integrated housing. Within the integrated housing, the various elements can be interconnected and transmit data therebetween using suitable connection arrangements, for example, an internal bus as known in the art, including the Inter-IC (I2C) bus, wiring, and printed circuit boards. For example, in the system B, the processing module 60 is interconnected to other elements of said system B by the bus 605.

The communication interface 604 of the processing module 60 allows the system B to communicate on the communication network 61. The communication network 61 can be implemented, for example, within a wired and/or a wireless medium.

Data is streamed, or otherwise provided, to the system B, in various embodiments, using a wireless network such as a Wi-Fi network, for example IEEE 802.11 (IEEE refers to the Institute of Electrical and Electronics Engineers). The Wi-Fi signal of these embodiments is received over the communications network 61 and the communications interface 604 which are adapted for Wi-Fi communications. The communications network 61 of these embodiments is typically connected to an access point or router that provides access to external networks including the Internet for allowing streaming applications and other over-the-top communications. Still other embodiments provide streamed data to the system B using the RF connection of the input block 62. As indicated above, various embodiments provide data in a non-streaming manner.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented, for example, in a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), smartphones, tablets, and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, retrieving the information from memory or obtaining the information for example from another device, module or from user.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", "one or more of" for example, in the cases of "A/B", "A and/or B" and "at least one of A and B", "one or more of A and B" is intended to encompass the selection of the first listed option (A) only, or the selection of the second listed option (B) only, or the selection of both options (A and B). As a further example, in the cases of "A, B, and/or C" and "at least one of A, B, and C", "one or more of A, B and C" such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

As will be evident to one of ordinary skill in the art, implementations or embodiments can produce a variety of signals formatted to carry information that can be, for example, stored or transmitted. The information can include, for example, instructions for performing a method, or data produced by one of the described implementations or embodiments. For example, a signal can be formatted to carry an image or video sequence on which was applied the process of Fig. 5. Such a signal can be formatted, for example, as an electromagnetic wave (for example, using a radio frequency portion of spectrum) or as a baseband signal. The information that the signal carries can be, for example, analog or digital information. The signal can be transmitted over a variety of different wired or wireless links, as is known. The signal can be stored on a processor-readable medium.

## Claims

1. A method comprising:
obtaining (401) a compressed binary mask;
broadcasting (402) the compressed binary mask on each element of a first vector of data;
obtaining (403) a fixed binary mask, each element of the fixed binary mask having a single non-zero bit, the single non-zero bit of a rightmost element of the fixed binary mask being located at a rightmost position of the element, the single non-zero bit of a first element of the fixed binary mask being right shifted of one unit with respect to a position of the single non-zero bit of a second element of the fixed binary mask on its right when present;
combining (404) the first vector with the fixed binary mask using a bitwise AND operator setting to one bits that are equal to one in both the fixed binary mask and the first vector, other bits being set to zero to obtain a second vector; and,
obtaining (405) the binary mask from a comparison of the second vector with an all zero vector.

2. A method comprising:
obtaining (501) a binary mask;
compressing (502) the binary mask to obtain a compressed binary mask;
storing (503) the compressed binary mask;
applying (504) the method of claim 1 to decompress the compressed binary mask; and,
applying (505) the decompressed compressed binary mask.

3. The method of claim 2 wherein the compressed binary mask is stored in a scalar value or in an array depending on memory accesses between the compressing of the binary mask and the applying of the decompressed compressed binary mask.

4. A device comprising electronic circuitry configured for:
obtaining (401) a compressed binary mask;
broadcasting (402) the compressed binary mask on each element of a first vector of data;
obtaining (403) a fixed binary mask, each element of the fixed binary mask having a single non-zero bit, the single non-zero bit of a rightmost element of the fixed binary mask being located at a rightmost position of the element, the single non-zero bit of a first element of the fixed binary mask being right shifted of one unit with respect to a position of the single non-zero bit of a second element of the fixed binary mask on its right when present;
combining (404) the first vector with the fixed binary mask using a bitwise AND operator setting to one bits that are equal to one in both the fixed binary mask and the first vector, other bits being set to zero to obtain a second vector; and,
obtaining (405) the binary mask from a comparison of the second vector with an all zero vector.

5. An apparatus comprising electronic circuitry configured for:
obtaining (501) a binary mask;
compressing (502) the binary mask to obtain a compressed binary mask;
storing (503) the compressed binary mask;
using the device of claim 4 for decompressing (504) the compressed binary mask; and,
applying (505) the decompressed compressed binary mask.

6. The apparatus of claim 5 wherein the compressed binary mask is stored in a scalar value or in an array depending on memory accesses between the compressing of the binary mask and the applying of the decompressed compressed binary mask.

7. A computer program comprising program code instructions for implementing the method according to claim 1, 2 or 3.

8. Non-transitory information storage medium storing program code instructions for implementing the method according to claim 1, 2 or 3.
